# EUROPEAN PATENT APPLICATION

(11) **EP 4 575 706 A1**
(43) Date of publication of application: **25.06.2025**
(21) Application number: 24212090.5
(22) Date of filing: 11.11.2024
(51) Int. Cl.: G05G 9/047, G05G 1/04, G05G 5/03

(54) **JOYSTICK**

(30) Priority: 22.12.2023 SE 2351508
(71) Applicant: Caldaro AB, 104 25 Stockholm (SE)
(72) Inventor: LÖFGREN, Petter, 141 70 Segeltorp (SE); ALBERTSSON, Mattias, 388 40 Trekanten (SE)
(74) Representative: Bergenstråhle & Partners AB

(57) **Abstract**

Joystick (1) comprising a base part (10) and a grip part (20). The base part (10) has a first shaft (12, 13) arranged for rotation around a first axis (x). The grip part (20) comprises a control shaft (21) which is connected to the first shaft (12, 13). The grip part (20) is, when operated by a user, arranged to rotate the control shaft (21) around the first axis (x) wherein the first shaft (12, 13) rotates around the first axis (x). The joystick (1) further has a friction control device (30), arranged to cause friction between the friction control device (30) and the first shaft (12, 13), and comprises an open ring (31) arranged around the first shaft (12, 13), and a clamping spring (32) arranged around the open ring (31) for pressing the open ring (31) towards the first shaft (12, 13). The clamping spring (32) is arranged in the joystick (1) so that the spring (32) is prevented from rotating with the first shaft (12, 13).

## Description

### Technical field

The present invention relates generally to a controller or joystick, for controlling for examples working machines within different application fields like, agriculture, construction equipment, cranes, forestry, industry, maritime and offshore, material handling, medical, mining etc.

### Background art

It is well known to use joysticks (controllers) for manual control of for example a vehicle, a tool or the like, both for controlling the vehicle's forward and reverse operation as well as for controlling a tool mounted on the vehicle, like for example a harvesting unit of a forestry machine. Many joysticks/controllers have a so-called "spring-return" function, where the joystick handle and other moveable parts (like shaft/shafts or center ball etc.) return to a "zero-position" by means of a spring-force of a spring. Another type of joystick/controller is a so-called "stay-put-friction" type, where the joystick handle and other moveable parts stays in the position where it is moved, even if an operator releases the grip of the handle. The invention described in this patent application is particularly suitable for the "stay-put-friction" type of joystick. Since many applications are demanding, like for example forestry industry, mining industry, and construction industry, tough demands are set to provide a robust joystick/controller which will last over time, without loosening its functions and its "behavior" or "feel" over time. Known prior art solutions have the problems of providing a robustness in combination with a smooth sense during the control motion of the joystick/controller, wherein for example the initial motion of the controller motion often is "jerky" due to the robust design. The robustness is a problem itself, since prior art solutions often do not withstand motion tests with several million repetitions of the joystick motion, wherein the "feel" and/or functions do not last over time. Due to the high demands in many technical fields, known solutions are expensive. This is particularly relevant for the "stay-put-friction" type of joystick.

Thus, there is a need of a robust joystick/controller with smooth motions, and which lasts over time, which despite that, is cost effective.

### Summary of invention

An object of the present invention is to provide a controller/joystick according to claim 1, which solves the above-described problems. The controller/joystick is for convenient reasons named joystick throughout the description, but can be a controller of any kind, like a joystick, a rotary control knob, a steering wheel or the like.

According to an aspect, a robust joystick, having very smooth motion control and "feel", lasting over time, and which is particularly suitable for a stay-put-friction type of joystick, is disclosed. The joystick comprises a base part and a grip part, wherein the grip part is arranged to be operated by a user and the base part is to be arranged at a machine. The base part comprises a first shaft arranged for rotation around a first axis which extends in a first axial extension direction. The grip part comprises a control shaft, which has a free first end and an opposite second end, wherein the second end is, preferably, fixedly connected to the first shaft of the base part, preferably such that the control shaft extends in a plane perpendicular to the first axial extension direction, but also solutions where the control shaft is aligned with the first shaft is also disclosed, for example a rotary control knob or a steering wheel. The grip part is, when operated by a user, arranged to rotate the control shaft around the first axis thereby rotating the first shaft of the base part around the first axis, for controlling a motion of the machine or a tool. Further, the joystick has a friction control device arranged to cause friction between the friction control device and the first shaft. The friction control device comprises an open ring arranged around the first shaft, and a clamping spring, i.e. a resilient clamp, arranged around the open ring, for clampingly pressing the open ring towards the first shaft. The clamping spring is arranged in the controller/joystick so that the clamping spring is prevented from rotating with the first shaft, when the grip part is operated by a user.

Such a solution provides a precise and tested friction of the motion of the first shaft and thereby the control shaft, from the very start of the motion of the joystick and through the complete motion, and from when the joystick is completely new until it has been used for several millions of repetitions. Further, the open ring, which, by being a separate part, provides a very well defined friction surface facing the first shaft, wherein the friction between the open ring and the first shaft is well defined. The clamping spring, which is arranged around the open ring, also provides a well-defined spring pressing force on the open ring, where the friction between the open ring and the first shaft also gets well-defined. By that it is also possible to test which combination of open ring and spring, which gives the friction that is requested, to get the correct "feel" or "sense" and long term function. The enclosing design (around the first shaft) also provides a large contact area between the open ring and the first shaft, where a major part of the circumference (seen in cross-section) of the first shaft is in contact with the open ring, for example at least over 60%, at least over 70% or at least over 80% of the circumference of the first shaft, is in contact with the open ring. It is also possible to change the open ring and/or the spring, if one in the unlikely case is not satisfied or if the details are worn out. On top of that, the open design of the open ring enables a "play" which may be used to tighten or loosen the grip contact/the friction contact, between the open ring and the first shaft. The spring is arranged in the joystick such that it is prevented from rotating, and preferably, the open ring is prevented from rotating relative the spring. By this, it is secured that the friction is maintained when the first shaft is rotating around its axis, and this is suitable especially for "stay-put-friction" types of joysticks. Known solutions do not provide such a robust joystick with such precise and tested friction, from the start of the motion through the complete motion of the control, and which lasts over time.

According to an embodiment, the joystick comprises a housing, which has a cavity, wherein the first shaft is rotatable around the first axis by being rotatably arranged in the cavity, and the clamping spring is prevented from rotating with the first shaft by having engagement means which is/are arranged to engage with the housing. For example, the walls of the housing which surrounds the cavity may have one or more protrusions, which engages with the engagements means of the spring in the form of one or more recesses. Or the opposite, by that the spring may comprise engagement means in the form of one or more protrusions or protruding arms, which engages with one or more recesses or cavities of the surrounding walls of the housing, which surrounds the cavity in which the first shaft is rotatable, and in position of the spring. By that, the shaft is rotatable in the cavity and the clamping spring is locked in its position in the cavity.

According to an embodiment, the open ring and the clamping spring are arranged in the cavity.

According to an embodiment, the clamping spring of the friction control device comprises an open ring part, enclosing the open ring, and engagement means for engagement with the joystick/housing. The engagement means is realized as two shanks, each arranged on respective sides of an opening of the open ring part and extending from the open ring part, in a direction away from the open ring. The clamping spring of the friction control device is, so to speak, shackle-shaped, wherein the open ring part of the spring encloses the open ring and the first shaft, and the shanks (shackles) extends from the open ring part, away from the first shaft. The shanks are by that, due to being arranged on opposite sides of an opening of the open ring part, arranged at a distance from each other, preferably extending away from the first shaft (and open ring) parallel relative each other. By that, if the shanks are movably arranged relative each other in the joystick, it is possible to move the shanks towards or away from each other, wherein the spring pressing force of the clamping spring, acting on the open ring, may be changed. The clamping spring is still prevented from rotating with the first shaft.

According to an embodiment, the friction control device further comprises a spring pressing adjustment device, arranged for adjusting the spring pressing force of the clamping spring against the open ring, thereby adjusting the friction between the friction control device and the first shaft. This is a very good function, since, if the open ring and/or the spring varies a bit in their production tolerances, the spring pressing force of the clamping spring on the open ring may be adjusted such that the exact and accurate friction between the first shaft and the friction control device is achieved. Each joystick may therefore be tested and tuned to the wanted values or "feel" etc. before it is delivered (during production). It is further possible to adjust later, if an operator has other demands or if the friction for some reason should change over time. This may also extend the lifespan of the joystick.

According to an embodiment, the spring pressing adjustment device is arranged to bear against one of the shanks of the two shanks of the friction control device and wherein the spring pressing adjustment device is movable in relation to the one of the shanks so that movement of the spring pressing adjustment device adjusts the distance between the two shanks and thereby the pressing force of the clamping spring against the open ring.

According to an embodiment, the spring pressing adjustment device is a screw threadedly arranged in the housing. The screw has a proximal end with a screwdriver engagement means and an opposite distal end that bears against the one of the shanks of the two shanks of the friction control device. This is a cost-effective way of achieving the friction control function.

According to an embodiment, the spring pressing adjustment device is angled relative a perpendicular of the one of the shanks of the two shanks of the friction control device. This enables a more precise adjustment of the spring pressing force since the indentation per threading is less compared to a perpendicular "pressing", and the indentation is less the more angled the pressing adjustment device is, relative a perpendicular of the shank.

According to an embodiment, the housing comprises a first half and a second half and the cavity of the housing comprises a first cavity half and a second cavity half. The first cavity half is arranged in the first half of the housing and is open towards the second half of the housing, and the second cavity half is arranged in the second half of the housing and is open towards the first half of the housing. By dividing the housing in two halves, it is both easy to produce the housing as well as to mount the joystick and further to dismount it. The latter is especially advantageous if some parts of the joystick need to change, like for example the friction control device (even if it is a very robust solution), if the parts have been worn out or if the friction is wrong from the start and so wrong that it may not be fixed by adjusting the spring force.

According to an embodiment, the clamping spring of the friction control device is made of spring steel. Spring steel is a good choice for the spring since it is an economic solution for providing a spring force of the friction control device. The material is resilient, and no plastic deformation is achieved, which is important for keeping the friction over time.

According to an embodiment, the clamping spring of the friction control device is made of carbon fiber. This is an alternative material to spring steel which for example is useful where for example metal is not an option in the application.

According to an embodiment, the open ring comprises a coating on a side which faces the first shaft. The coating may be a suitable coating for providing an exact and/or controlled friction coefficient, or if the open ring for some reasons is not possible to produce with the wanted surface characteristics. The coating may be of a special type of polymer, which has low friction and is very resistant to abrasion.

According to an embodiment, the open ring and the clamping spring have a substantial equal width in a direction of the first axis.

According to an embodiment, the joystick further comprises a second shaft arranged for rotation around a second axis extending in a second axial direction perpendicular to the first direction. The second end of the control shaft is further connected to the second shaft, wherein the grip part, when being operated by a user, is arranged to rotate the second shaft around the second axis, thereby rotating the second shaft of the base part around the second axis. The joystick further comprises a second friction control device, which is arranged to cause friction between the second friction control device and the second shaft. The second friction control device comprises a second open ring, arranged around the second shaft, and a second clamping spring, arranged around the second open ring, for pressing the second open ring towards the second shaft. The second clamping spring is arranged in the joystick so that the second spring is prevented from rotating with the second shaft, when the grip part is operated by a user. By such a solution, the invention is disclosed also for a joystick which is operatable in two different directions (biaxial joystick) and thereby functional with the same advantages for a greater number of functions compared to the joystick with one shaft (uniaxial joystick).

### Brief description of drawings

The invention is now described, by way of example, with reference to the accompanying drawings, in which:
Fig. 1a-c show an isometric view and two side views of a single-axis joystick according to the invention.
Fig. 2 shows an exploded view of the joystick of Fig. 1a-c.
Fig. 3 shows a section view of the joystick as visible in Fig. 1b.
Fig. 4a shows an isometric view of a friction control device of the joystick according to the invention.
Fig. 4b shows a section view of the inventive joystick, along a section line A-A of Fig. 3.
Fig. 5 shows a section view of the inventive joystick, along a section line B-B visible in Fig. 3.
Fig. 6 shows an exploded view of an alternative double-axis joystick according to the invention.

### Description of embodiments

In the following, a detailed description of a joystick according to the invention is disclosed in detail in respect of embodiments and in reference to the accompanying drawings. All examples herein should be seen as part of general description and therefore possible to combine in any way in general terms.

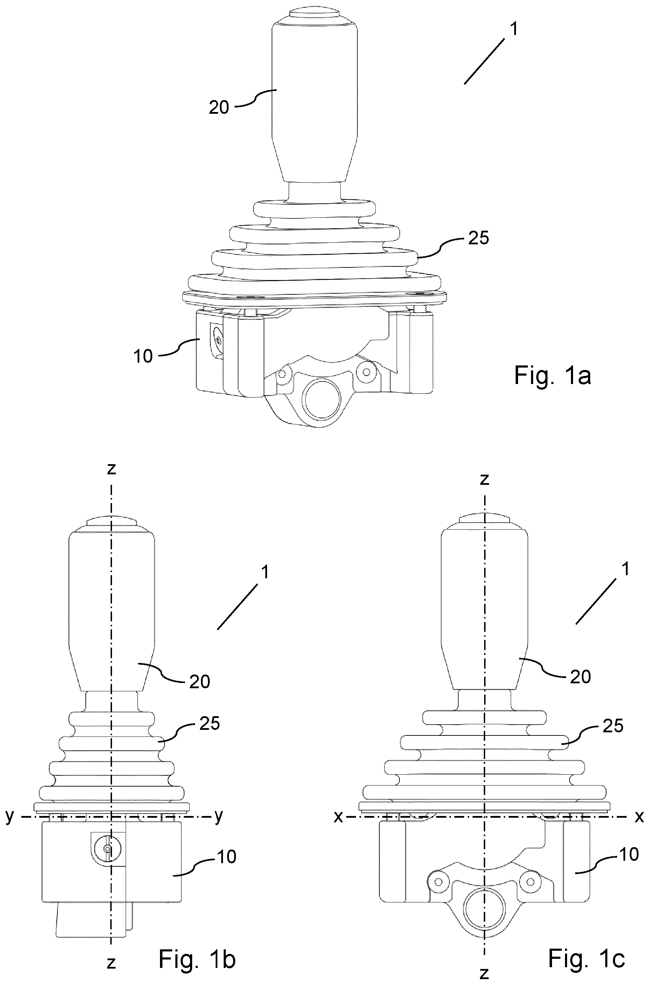

Fig. 1a shows an isometric view of a single-axis joystick 1 according to the invention and Fig. 1b-c are two different side views of the joystick 1 of Fig. 1a. The joystick 1 comprises a base part 10 and a grip part 20. The base part 10 is arranged to be fixedly attached to a machine/vehicle (not shown), in the normal case and the machine/vehicle may comprise one or more joysticks for controlling tools and/or the driving of the machine/vehicle. The grip part is arranged to be operated by a user, for controlling the machine/vehicle and its tools. A flexible cover 25 is arranged around the grip part 20, to cover sensitive parts of a connection area (gear) between the base part 10 and the grip part 20. The joystick is normally arranged with the grip part 20 in an upright (or slightly inclined) extension and the base part 10 is arranged with a substantially horizontal extension. Referring to this and throughout this application, the base part 10 has an extension in a first axial extension direction X, along a first axis x, and an extension in a second axial extension Y, along a second axis y, and further the grip part 20 has an extension in a third axial extension Z, along a third axis z, which is an upward extension. The first axis x is perpendicular relative the second axis y and the third axis z is perpendicular relative the first and second axis x, y in a "ready state" of the grip part 20 (when not operated).

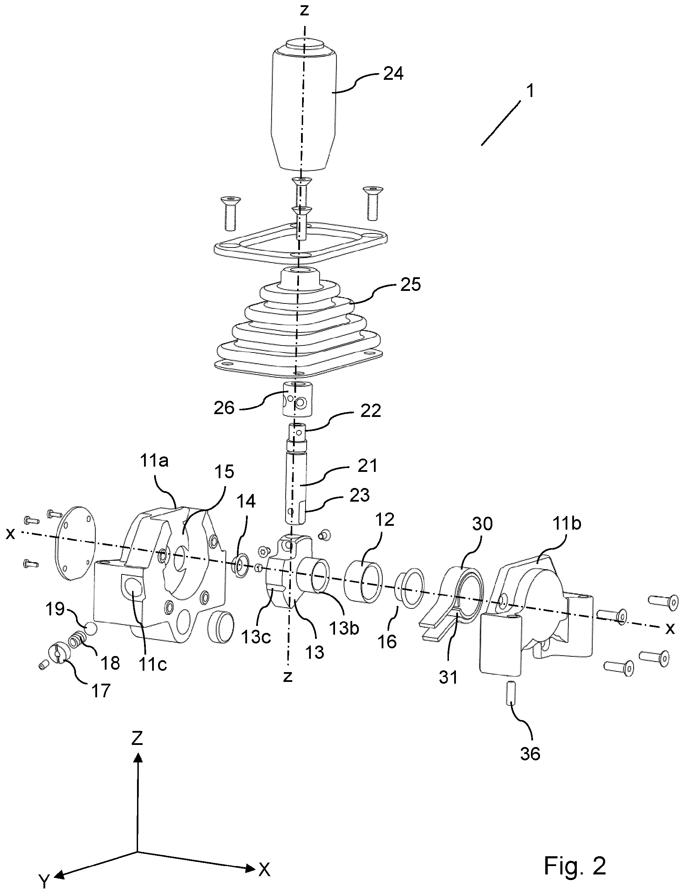

Fig. 2 shows an exploded view of the joystick 1 of Fig. 1a-c. The grip part 20 comprises a control shaft 21 which extends around the third axis z and which has a free first end 22 and an opposite second end 23. The free first end 22 is arranged for a joystick grip 24, which is arranged around the control shaft 21 in direction from the first end 22 and connected to the control shaft 21 via a connector part 26. The flexible cover 25 is arranged around the control shaft 21 and extends between the joystick grip 24 and the base part 10. The second end 23 of the control shaft 21 is connected to a first shaft 12, 13 of the base part 10, which first shaft 12, 13 extends in the first direction X and which is arranged to be rotated around the first axis x. The connection of the second end 23 of the control shaft 21 is more precise made via a connector hub 13, which comprises the first shaft 12, and the connector hub 13/shaft 12 is arranged to rotate around the first axis x. The rotation is facilitated by the grip part 20, which as mentioned is connected to the first shaft 12, 13 via the connector hub 13. The grip part 20, when being operated by a user, is thus arranged to rotate the control shaft 21 around the first axis x and thereby rotate the connector hub 13/shaft 12 of the base part 10 around the first axis x.

The base part 10 further comprises a housing 11, which encloses the first shaft 12 and the connection hub 13. The housing 11 comprises a first half 11a (to the left in Fig. 2) and a second half 11b (to the right in Fig. 2), and further a cavity 15. The first shaft 12 and the connection hub 13 is rotatably arranged in the cavity 1 of the housing 11 and the cavity 15 comprises a first cavity half 15a and a second cavity half 15b, which, when the first half 11a and the second part 11b of the housing 11 is assembled to one unit, forms the cavity 15. The first cavity half 15a is thus arranged in the first half 11a of the housing 11 and is "open" towards the second half 11b of the housing 11. The second cavity half 15b is arranged in the second half 11b of the housing 11 and is "open" towards the first half 11a of the housing 11.

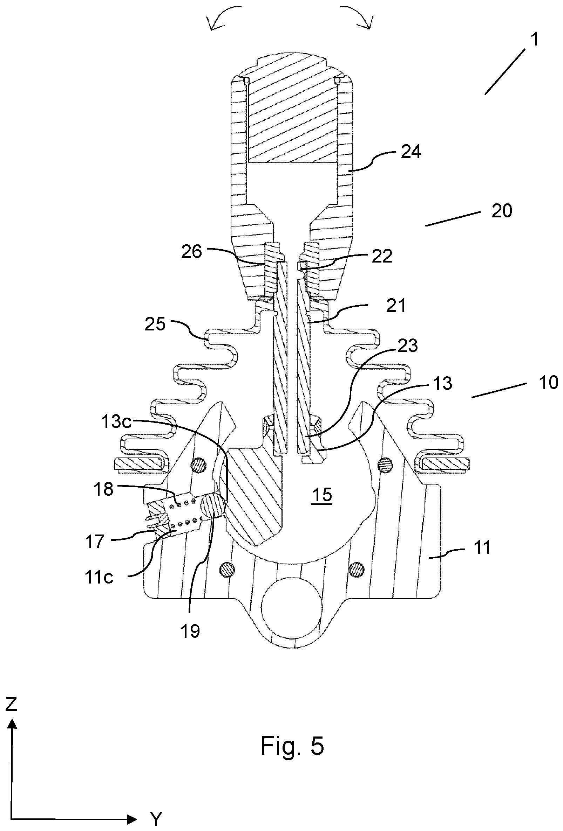

The connector hub 13 comprises a first protruding shaft part 13a (not visible) and a second protruding shaft part 13b, which protrudes towards the second half 11b of the housing 11, and the first shaft 12 is arranged around the shaft part 13b of the connector hub 13. The first shaft 12 and the connector hub 13 are rotatably arranged in the cavity 15 by first and second guide bearings 14, 16, which are arranged to hold and center the first shaft 12 and the connector hub 13 in the cavity 15 of the housing 11, wherein the first guide bearing 14 is arranged in a groove in the first half 11a of the housing 11 and the second guide bearing 16 is arranged in a groove in the second half 11b of the housing 11. The connector hub 13 comprises a recess 13c which is arranged to provide a clear "zero-position" for the grip part 20, which is an upright position in which the joystick 1 does not provide any function, i.e., a ready state. The zero-position is facilitated by a spring-loaded pressing device 17, 18, 19, which is arranged in a through hole 11c of the first half 11a of the housing 11. The spring-loaded pressing device comprises a screw part 17, a spring 18 and a pressing ball 19, wherein the screw part 17 is arranged to be screwed into the through hole 11c and by that compress the spring 18, which in turn presses the ball 19 towards the connector hub 13. When the recess 13c of the connector hub 13 is exposed at the trough hole 11c, the ball 19 springs out a bit further and engages slightly with the recess 13c. This is further explained in connection to Fig. 5.

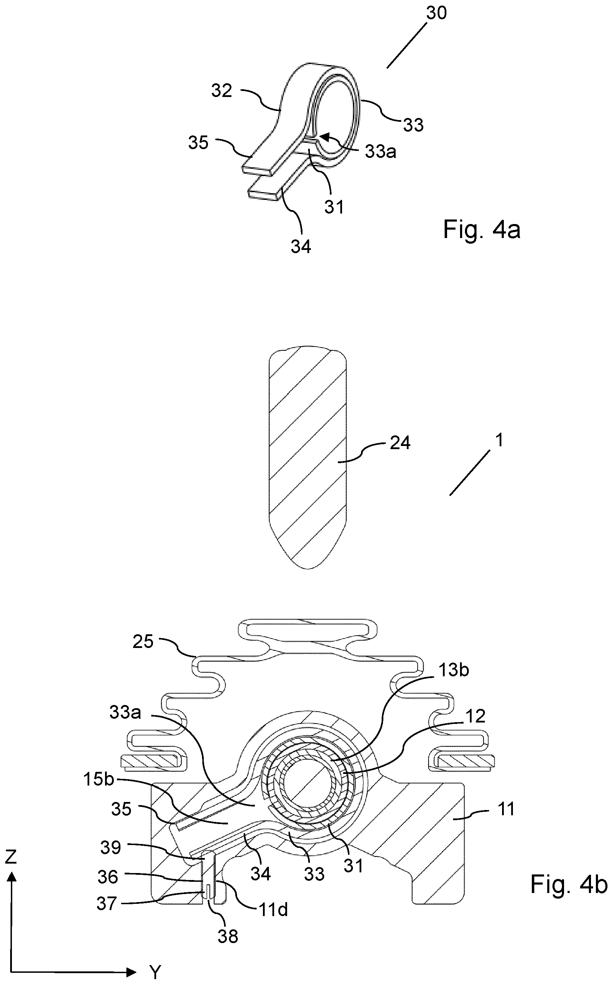

The inventive joystick 1 further comprises a friction control device 30, which is arranged to cause a controlled friction between the friction control device 30 and the first shaft 12. The friction device 30 is explained in detail below, in connection to Figs. 4a-b, but from the exploded view shown in Fig. 2 it can be understood that the friction control device 30 is arrangeable around the first shaft 12 and further arrangeable in the second half 11b of the housing 11. The friction control is facilitated by a combination of features, such as that the friction control device 30 is made of spring steel, it comprises an open ring 31 and the spring force is further adjustable by means of a spring pressing adjustment device 36. This will further be explained below. The joystick 1 further comprises other parts like lids/covers, sealings etc. which is visible in Fig. 2 but is not further explained and the joystick is mounted together by a plurality of screws as can be seen in the exploded view of Fig. 2.

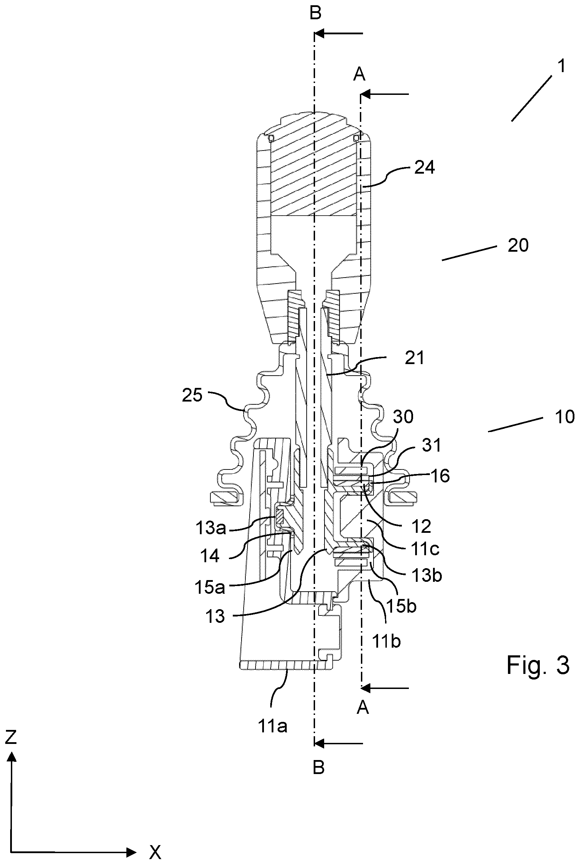

Fig. 3 shows a section view of the joystick 1 as visible in Fig. 1b. As can be seen, the first half 11a and the second half 11b of the housing 11 are mounted together and the first cavity half 15a and a second cavity half 15b forms the cavity 15. As explained above, the hub connector 13 comprises the first protruding shaft part 13a, which protrudes towards the first half 11a of the housing, and the second protruding shaft part 13b, which protrudes towards the second half 11b of the housing 11. The housing 11 comprises corresponding grooves arranged for the protruding shaft parts 13a, 13b and the first shaft 12 and the connector hub 13 are rotatably arranged in the cavity 15 by the first and second guide bearings 14, 16, which are arranged in the grooves of the housing 11 and arranged around the first and second protruding shaft parts 13a, 13b. The friction control device 30 with is open ring 31 are arranged in the second cavity half 15b of the second half 11b of the housing 11, where they enclose the first shaft 12. The control shaft 21 is connected centrally to the connector hub 13 and extends upwards and ends with the joystick grip 24, and the flexible cover 25 extends between upper parts of the base part 10 and the grip part 20 and encloses the control shaft 21.

Fig. 4a shows an isometric view of the friction control device 30 of the joystick 1 and Fig. 4b shows a section view of the inventive joystick 1, along a section line A-A visible in Fig. 3. The friction control device 30 is shackle-shaped and comprises the open ring 31, a clamping spring 32 (i.e. a resilient clamp) which comprises an open ring part 33, which encloses the open ring 31 and further two engagement means 34, 35 in the form of two shanks 34, 35. The two shanks are arranged on respective sides of an opening 33a of the open ring part 33 and extend from the open ring part 33, in a direction away from the open ring 31. The two shanks 34, 35 are quite long to provide a very exact adjustment of the friction. Preferably, the two shanks 34, 35 extend from the open ring part 33, at least as long as half the diameter of the open ring part 33. As can be seen, the friction control device 30 is symmetric to ensure equal friction in both directions. The friction control device 30 is arranged with its open ring part 33 and the open ring 31 around the first shaft 12 for pressing the open ring 31 towards the first shaft 12. The clamping spring 32 is arranged in the joystick 1 so that the spring 32 is prevented from rotating with the first shaft 12 and the connector hub 13, when the grip part 20 is operated by a user. The friction control is as mentioned facilitated by a combination of features, such as the friction control device 30 is made of spring steel with known and well defined clamping spring force and that the enclosing surface of the clamping spring 32 is chosen in correspondence to the wanted clamping force and friction. Further, the open ring 31 has well defined friction parameters (and it may comprise a coating on the surface facing the first shaft 12, for even higher precision of the friction parameters), and that the spring force is adjustable by means of the spring pressing adjustment device 36 pressing on at least one of the two shanks 34, 35.

As can be seen in Fig. 4b, the first shaft 12 is centrally arranged around the second protruding part 13b of the connector hub 13, in a circular part of the second cavity half 15b. The open ring 31 of the friction control device 30 is in turn arranged around the first shaft 12, and the open ring part 33 of the clamping spring 32 encloses the open ring 31. The two shanks 34, 35 are arranged in a recess part of the second cavity half 15b, which recess part extends away from the circular part of the second cavity half 15b. By that, the shanks 34, 35 are prevented from rotating in the second cavity half 15b. The open ring 31 is fixedly arranged to the clamping spring 32, preferably by engaging means and/or glue for fixing the open ring 31 to the spring 32. The clamping spring 32 has well-defined characteristics in the form of spring constant, dimensions, surfaces etc. it has a well-defined pressing force on the open ring 31, which in turn presses on the first shaft 12. Further, since also the open ring 31 has well-defined characteristics in the form of dimensions, friction, surfaces etc., the "clamping" friction on the first shaft is well-defined and controlled. This gives a smooth motion, from the "zero-position" and over the complete back-and-forth motion of the joystick 1, which also lasts over million of repetitions, which no prior art joysticks can achieve, and yet with a very robust design.

On top of that, it is possible to adjust the pressing force of the spring by adjusting the spring pressing adjustment device 36 which is arranged in a through hole 11d in the housing 11. A movement of the spring pressing adjustment device 36 adjusts the distance between the two shanks 34, 35 and thereby the clamping pressing force of the spring 32 against the open ring 31 and in turn, on the first shaft 12. The spring pressing adjustment device 36 comprises a first end 37 with a screwdriver engagement means 38, threads 36 for engagement with walls of the through hole 11d of the housing 11 and further a second end 39, which is arranged to bear against one shank 34 of the two shanks 34, 35 which is closest to the spring pressing adjustment device 36, for pressing on the shank 34. Preferably, the spring pressing adjustment device 36 is angled relative a perpendicular of the one of the shanks 34 of the two shanks 34, 35 of the friction control device 30, to provide a more precise setting of the pressing force. The two shanks 34, 35 extends away from open ring part 33 with a distance from each other and are arranged parallel to each other, wherein, when the spring pressing adjustment device 36 presses on the shank 34, the distance between the two shanks 34, 35 decreases. And opposite, if the spring pressing adjustment device 36 is reversed, the distance between the two shanks 34, 35 increases. Thus, if the spring pressing force needs to be adjusted, it is possible to do this by the inventive friction control device 30.

Fig. 5 shows a section view of the inventive joystick 1, along a section line B-B visible in Fig. 3. The control shaft 21 of the grip part 20 is connected by its free first end 22 to the joystick grip 24, via the connector part 26. The second end 23 of the control shaft 21 is fixedly connected to the connector hub 13 by being inserted in a recess in the top of the connector hub 13. When the grip part 20 is pushed forward or is pulled backward by an operator as indicated by the arrows above the joystick 1, the connector hub 13 and the first shaft 12 (not visible) rotates in the cavity 15, wherein the rotation is sensed by for example a hall sensor arrangement or the like, wherein in electronic signals corresponding to the motion, is transferred to a control system for controlling the function to be facilitated by the joystick 1, in a known manner. The "zero-position" or mid-point of the grip part 20, which is the upright position in which the joystick 1 does not provide any function, (its ready state), is shown in Fig. 5, where the recess 13c of the connector hub 13 is exposed at the trough hole 11c of the housing 11. The screw part 17 of the spring-loaded pressing device 17, 18, 19, is screwed into the through hole 11c and compresses the spring 18, which in turn presses the ball 19 towards the connector hub 13, wherein the ball 19 engages slightly with the recess 13c of the connector hub 13. The recess 13c is deep enough to provide a clear position for the mid-point and shallow enough to provide a smooth start of the motion, and such that the friction provided by the friction control device 30 is not "disturbed".

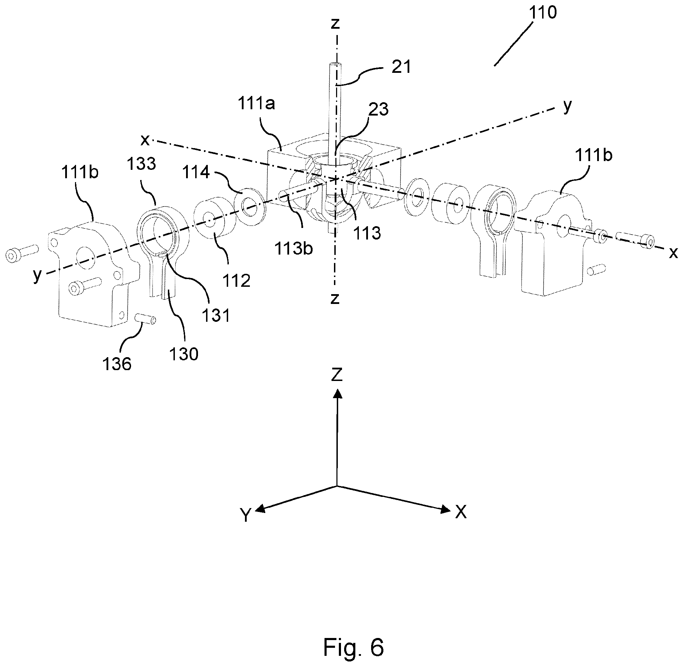

Fig. 6 shows an exploded view of an alternative double-axis joystick according to the invention. The double-axis joystick is built up in a similar manner as the single-axis joystick 1, described above. In figure 6, the grip part is only partly shown. A base part 110 comprises a first housing part 111a, and two second housing parts 111b, where two first shafts 112 extend in perpendicular directions x, y relative each other and joins in a common connection hub 113. The common connection hub 113 comprises two arc-shaped connectors which are connected to a respective one of the two first shafts 112 for motion of the shaft around one axis each, and comprises a clearance hole, to not interfere with the motion of the joystick handle (grip part) in the other direction. In this case, the control shaft 21 is connected by its second end 23 to the respective shaft such that it is pivotable in four directions, (back/forth and left/right). Further, a friction control device 130 is arranged in a cavity (not visible) in respective second housing part 111b and is prevented from rotating with the first shaft 112, when the grip part 20 is operated by a user. The functions are exactly the same as described above and the friction control device 130 comprises an open ring 131, a clamping spring 132 with an open ring part 133, two shanks etc. The spring pressing force is also adjustable by a spring pressing adjustment device 136 in the same way. All functions and advantages as described above for the single-axis joystick 1 applies to the double-axis joystick of Fig. 6, why the scope of the invention also is applicable to this double-axis joystick.

Although the description above contains a plurality of specificities, these should not be construed as limiting the scope of the concept described herein but as merely providing illustrations of some exemplifying embodiments of the described concept. It will be appreciated that the scope of the presently described concept fully encompasses other embodiments which may become obvious to those skilled in the art, and that the scope of the presently described concept is accordingly not to be limited. Reference to an element in the singular is not intended to mean "one and only one" unless explicitly so stated, but rather "one or more." All structural and functional equivalents to the elements of the above-described embodiments that are known to those of ordinary skill in the art are expressly incorporated herein and are intended to be encompassed hereby.

## Claims

1. Joystick (1) comprising a base part (10) and a grip part (20), the grip part (20) being arranged to be operated by a user, the base part (10) having a first shaft (12, 13) arranged for rotation around a first axis (x) extending in a first axial extension direction (X),
the grip part (20) comprising:
- a control shaft (21) having a free first end (22) and an opposite second end (23), wherein the second end (23) is connected to the first shaft (12, 13) of the base part (10), wherein the grip part (20), when being operated by a user, is arranged to rotate the control shaft (21) around the first axis (x) thereby rotating the first shaft (12, 13) of the base part (10) around the first axis (x),
**characterized by** the joystick (1) having a friction control device (30) arranged to cause friction between the friction control device (30) and the first shaft (12, 13), the friction control device (30) comprising an open ring (31) arranged around the first shaft (12, 13), and a clamping spring (32) arranged around the open ring (31) for pressing the open ring (31) towards the first shaft (12, 13), wherein the clamping spring (32) is arranged in the joystick (1) so that the clamping spring (32) is prevented from rotating with the first shaft (12, 13), when the grip part (20) is operated by a user.

2. Joystick (1) according to claim 1, wherein the joystick (1) comprises a housing (11) having a cavity (15), wherein the first shaft (12, 13) is rotatable around the first axis (x) by being rotatably arranged in the cavity (15), and the clamping spring (32) is prevented from rotating with the first shaft (12, 13) by having engagement means (34, 35) which is/are arranged to engage with the housing (11).

3. Joystick (1) according to claim 2, wherein the open ring (31) and the clamping spring (32) are arranged in the cavity (15).

4. Joystick (1) according to any of claims 2-3, wherein the clamping spring (32) of the friction control device (30) comprises an open ring part (33) enclosing the open ring (31), and the engagement means (34, 35) for engagement with the housing (11) being realized as two shanks (34, 35), each arranged on respective sides of an opening (33a) of the open ring part (33) and extending from the open ring part (33), in a direction away from the open ring (31).

5. Joystick (1) according to any of the preceding claims, wherein the friction control device (30) further comprises a spring pressing adjustment device (36) for adjusting the pressing force of the clamping spring (32) against the open ring (31) thereby adjusting the friction between the friction control device (30) and the first shaft (12, 13).

6. Joystick (1) according to claim 5, wherein the spring pressing adjustment device (36) is arranged to bear against one of the shanks (34) of the two shanks (34, 35) of the friction control device (30) and wherein the spring pressing adjustment device (36) is movable in relation to the one of the shanks (34) so that movement of the spring pressing adjustment device (36) adjusts the distance between the two shanks (34, 35) and thereby the pressing force of the clamping spring (32) against the open ring (31).

7. Joystick (1) according to claim 5 or 6 when dependent on claim 4, wherein the spring pressing adjustment device (36) is a screw threadedly arranged in the housing (11), the screw (36) having a proximal end (37) with a screwdriver engagement means (38) and an opposite distal end (39) that bears against the one of the shanks (34) of the two shanks (34, 35) of the friction control device (30).

8. Joystick (1) according to any of claims 5-7 when dependent on claim 4, wherein the spring pressing adjustment device (36) is angled relative a perpendicular of the one of the shanks (34) of the two shanks (34, 35) of the friction control device (30).

9. Joystick (1) according to any of claims 2-8, wherein the housing (11) comprises a first half (11a) and a second half (11b) and the cavity (15) of the housing (11) comprises a first cavity half (15a) and a second cavity half (15b), wherein the first cavity half (15a) is arranged in the first half (11a) of the housing (11) and is open towards the second half (11b) of the housing (11) and the second cavity half (15b) is arranged in the second half (11b) of the housing (11) and is open towards the first half (11a) of the housing (11).

10. Joystick (1) according to any of the preceding claims, wherein the clamping spring (32) of the friction control device (30) is made of spring steel.

11. Joystick (1) according to any of claims 1 - 9, wherein the clamping spring (32) of the friction control device (30) is made of carbon fibre.

12. Joystick (1) according to any of the preceding claims, wherein the open ring (31) comprises a coating on a side which faces the first shaft (12, 13).

13. Joystick (1) according to any of the preceding claims, wherein the open ring (31) and the clamping spring (32) have a substantial equal width in a direction of the first axis (x).

14. Joystick (1) according to any of the preceding claims, further comprising a second shaft (112, 113) arranged for rotation around a second axis (y) extending in a second axial direction (Y) perpendicular to the first direction (X),
wherein the second end (23) of the control shaft (21) further is connected to the second shaft (112, 113), wherein the grip part (20), when being operated by a user, is arranged to rotate the second shaft (112, 113) around the second axis (y) thereby rotating the second shaft (112, 113) of the base part (110) around the second axis (y),
wherein the joystick (1) having a second friction control device (130) arranged to cause friction between the second friction control device (130) and the second shaft (112, 113), the second friction control device (130) comprising a second open ring (131) arranged around the second shaft (112, 113), and a clamping second spring (132) arranged around the second open ring (131) for pressing the second open ring (131) towards the second shaft (112, 113), wherein the clamping second spring (132) is arranged in the joystick (1) so that the clamping second spring (132) is prevented from rotating with the second shaft (112, 113), when the grip part (20) is operated by a user.
